(19) Europäisches Patentamt / European Patent Office / Office européen des brevets

(11) **EP 2 100 906 A1**

(12) **EUROPEAN PATENT APPLICATION**

(43) Date of publication:
**16.09.2009 Bulletin 2009/38**

(51) Int Cl.:
**C08G 18/48** (2006.01)    **C08G 18/67** (2006.01)
**C08G 18/83** (2006.01)    **C08J 9/00** (2006.01)
**C08J 9/12** (2006.01)    **B01J 20/26** (2006.01)

(21) Application number: **08004624.6**

(22) Date of filing: **12.03.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicants:
• **Recticel N.V.
1140 Brussels (BE)**

• **BASF SE
67056 Ludwigshafen (DE)**

(72) Inventor: **Spanhove, Peter
9230 Wetteren (BE)**

(74) Representative: **Thoma, Michael
Lorenz - Seidler - Gossel
Widenmayerstraße 23
80538 München (DE)**

(54) **Flexible, hydrophilic polyurethane foam**

(57)    The present invention relates to a flexible, hydrophilic polyurethane foam comprising at least one polyalkylene imine, wherein the polyurethane comprises acrylate groups which allow to bind the polyalkylene imine to the polyurethane and a process for its production.

**Description**

FIELD OF THE INVENTION

The present invention relates to a flexible, hydrophilic polyurethane foam comprising at least one polyalkylene imine, such as polyethylene imine, a continuous process for its production and its use for the adsorption of organic and/or inorganic compounds, such as dyes and/or heavy metals.

DESCRIPTION OF THE RELATED ART

The manufacture of polyurethane foam by reacting a polyisocyanate with compounds with at least two iscoyanate reactive hydrogen atoms has already been known for a long time and has been described in the art.
It has additionally been known to add adsorbing agents to polyurethane foams in order to obtain useful materials for various applications in which adsorption of various active agents or waste material is useful. Such applications include the treatment of waste water for the removal of heavy metals, dyes, anionic heavy metal complexes, anionic organic molecules or the treatment of waste water from the paper industry.
WO 01/55242 describes polyurethane foams useful in these applications including an adsorbing agent, among which also polyethylene imines are mentioned. The foams according to this prior art, suffer from severe disadvantages. First of all, in order to fix the polyethylene imine securely to the polyurethane backbone, a high temperature (80° C-150° C) for thermofixation is required. This leads to disintegration of the polyurethane foam by aminolysis. Secondly, the polyurethane foams according to WO 01/55242 are not produced in a continuous process and the conditions described in relation to fix the adsorbing agent to the polyurethane are only described with relation to foam flakes. The processability of foam flakes in order to fix the adsorbing agent is not possible in a continuous way, thereby leading to very high process costs. Additionally, the use of foam flakes offers a restricted application range in adsorption processes. Last but not least, the polyurethane foams described in WO 01/55242 do not have a high capacity to adsorb large amounts of compounds due to the lack of secure fixation and the small amount of adsorbing agent to be fixed on the polyurethane foam.
Therefore, a need exists to provide improved polyurethane foams useful for adsorbing large amounts of active compounds.

SUMMARY OF THE INVENTION

One object of the invention is therefore to provide a polyurethane material which includes an adsorbing agent which is securely fixed to the carrier material.
Another object of the present invention is to provide an easy and convenient process for the preparation of the polyurethane material.
It has now surprisingly been found that the use of the flexible, hydrophilic polyurethane foam according to the invention solve the above objects.
In a first aspect, the invention therefore relates to a flexible, hydrophilic polyurethane foam comprising acrylate groups which allow to bind at least one polyalkylene imine.
In a second aspect, the invention relates to a continuous process for the manufacture of a flexible, hydrophilic polyurethane foam sheet according to the invention, comprising the steps

a) providing the polyurethane foam comprising the acrylate groups in sheet form

b) contacting the polyurethane foam with at least one polyalkylene imine, such as polyethylene imine

c) heating the polyurethane foam obtained in step b)

In a third aspect, the invention relates to the use of the flexible, hydrophilic polyurethane foam for the adsorption of organic compounds or inorganic compounds, such as dyes and/or heavy metals.

DETAILED DESCRIPTION OF THE INVENTION

Flexible, hydrophilic polyurethane foams are obtainable by methods which are well-known to the man skilled in the art and are for example described in US 4,051,081 and US 3,873,476.
They can for instance be produced by reacting at least one polyisocyanate with at least one compound comprising at least two isocyanate reactive hydrogen atoms. The polyisocyanates are preferably diisocyanates, and may be the known (cyclo)aliphatic and aromatic polyisocyanates. Examples for aromatic polyisocyanates include but are not limited to toluene diisocyanate (TDI), in particular 2,4-, 2,6-toluene diisocyanate, 4,4'-, 2,4'- and 2,2'-diphenylmethane diisocyanate (MDI), polyphenylene polymethylene polyisocyanates (crude MDI) and 1,5-naphthalene diisocyanate. It is also possible to use prepolymers of the above mentioned polyisocyanates.

The at least one compound comprising at least two isocyanate reactive hydrogen atoms is selected from the group consisting of polyether polyols, polyester polyols or mixtures thereof.

Flexible hydrophilic polyurethane foams are also obtainable by the prepolymer technology, as is known by a skilled person. According to this technology, an isocyanate-capped prepolymer, which is the reaction product of an excessive amount of a polyisocyanate with a polyether polyol of at least about 50 % wt.-% ethylene oxide, is reacted with water. Suitable prepolymerse are for example described in GB-A-1 429 711 or in US 6,271,277.

The flexible hydrophilic polyurethane foams according to the invention comprise acrylate groups for secure fixation of the polyalkylene imine, i.e. the acrylate groups function as anchor groups for the polyalkylene imine. Preferably, the compound used in order to provide the acrylate groups comprises, in addition to the at least one acrylate group, at least one, more preferred at least two isocyanate reactive hydrogen atoms. In a most preferred embodiment alkyl acrylates are used having at least one, preferably at least two hydroxy groups and/or amine groups. Preferably, the compounds which will eventually provide the anchor groups in the polyurethane are selected from (di)hydroxyalkyl acrylates, in particular (di)hydroxyethylmonoacrylate and (di)hydroxybutyl monoacrylate.

In a preferred embodiment the alkyl acrylates may contain at least two hydroxy groups and/or amine groups. By adding these compounds to the polyurethane reactive mixture, these compounds act as a chain extender during the polyurethane polymerisation reaction, so that they are incorporated in the polyurethane matrix without negatively affecting the polymer build-up and hence the mechanical properties of the obtained polyurethane.

The acrylate groups may be provided by an additional component containing in addition to the acrylate group one isocyanate reactive hydrogen atom in relation to the polyisocyanates and the compound containing at least two isocyanate reactive hydrogen atoms containing one acrylate group, by an additional component with at least two isocyanate reactive hydrogen atoms, or by the components used for the preparation of the polyurethane, such as polyether or polyester polyols, which will at least two isocyanate reactive hydrogen atoms.

The polyalkylene imine comprised in the polyurethane foam is preferably polyethylene imine.

The flexible, hydrophilic polyurethane foam of the invention has the advantage that the hydrophilic foam swells and therewith enables water to penetrate into the polyurethane matrix and allows the polyalkylene imine to even react with the acrylate groups that are situated at the inner surface of the polyurethane matrix. By swelling in water the active surface of the polyurethane is increased, thereby enhancing the accessibility of the acrylate groups for the reaction with the polyalkylene imine. Consequently a large amount of polyalkylene imine can be bound to the polyurethane matrix and the capacity of the polyurethane sheet to adsorb any desired compounds will increase.

The polyurethane foam of the invention may be directly produced in the form of sheets. Alternatively, it may be produced in the form of blocks. In this case, the polyurethane blocks are subsequently cut into sheets of the desired thickness. The thickness of the sheets is preferably between 1 mm to about 100 mm, more preferably between 2 mm- 25 mm. These thickness ranges allows an optimal processing of the foam sheet according to the invention as described in more detail below.

The density of the polyurethane foam is preferably about 15 $kg/m^3$ to about 250 $kg/m^3$, more preferably about 25 $kg/m^3$ to about 100 $kg/m^3$, most preferred about 30 $kg/m^3$ to about 50 $kg/m^3$. In a preferred embodiment, In a preferred embodiment, the polyurethane foam of the invention comprises at least one polyethylene imine as the polyalkylene imine. Polyethylene imines are well-known as adsorbing agents for heavy metal ions, organic and inorganic compounds. Tetraethyldiethylenetriamine, which is a lower molecular weight polyalkylene imine, is particularly well known for its complexing capacity with cupper salts. Polyalkylene imines can have a molecular weight (Mw) between 200 and 2 000 000. Polyalkylene imines will usually contain primary, secondary and tertiary amine groups. Modified polyalkylene imines are also well known, and are for example disclosed in WO 01/55242. It is assumed, without being bound to a theory, that particularly the primary amine groups of the polyalkylene imines will react with the acrylate groups, which are incorporated in the polyurethane foam as described above, through the Michael addition, thereby covalently binding the polyalkylene imines to the polyurethane foam structure. This covalent bond ensures a secure fixation of the polyalkylene imine to the polyurethane foam. By contacting, preferably by impregnation, the polyurethane foam sheet with the at least one polyalkylene imine, preferably polyethylene imine, which is preferably dissolved in water, the foam swells and the surface thereof increases. Thus, more of the polyalkylene imine, in particular polyethylene imine, is fixed to the foam. In addition to the above described reaction between the primary amine groups and the acrylate groups, incorporated in the polyurethane foam matrix, the primary amine groups as well as the secondary amine groups of the polyalkylene imine may as well react with any free isocyanate groups which remain unreacted after the polymerisation of the polyurethane. In a preferred embodiment, additionally any additives may be used in step b) which promote the reaction of amine groups of the polyalkylene imine with acrylate groups.

In another embodiment, in addition to the polyalkylene imines, the polyurethane sheet may additionally comprise at least one polymer of N-vinyl monomers, preferably selected from the group consisting of polyvinyl pyrrolidone, polyvinyl imidazole and mixtures thereof. Such polymers, which are also well known as adsorbing agents for organic and inorganic compounds, may thus further enhance the adsorption capacity of the polyurethane foams according to the invention.

Preferably, the polymer of N-vinyl monomers may be added in powder form to the polyurethane reactive, in particular to the compounds with at least two active hydrogen atoms. The polymers of N-vinyl monomers are not reactive with the reactive groups in the polyurethane reactive mixture and therefore it is assumed that these polymers do not interfere with the polyurethane polymerisation reaction. The powders, namely polyvinyl pyrrolidone and polyvinyl imidazole can therefore easily be mixed into the formulation for producing the polyurethane and cured as such. In an aqueous environment the foam will swell and substances to be adsorbed, such as dyes, may penetrate into the foam with access to the polyvinyl pyrrolidone or polyvinyl imidazole powders incorporated therein. The polyurethane foams of the invention are advantageous over known hydrophobic formulations of polyurethanes in that they have an increased adsorption capacity in aqueous medium. This is due to the fact that these foams swell in the presence of an aqueous medium so that the compounds to be adsorbed can penetrate completely into the polyurethane matrix. Additives to increase the water absorption and swelling capacity, which are well known to the man skilled in art, may be incorporated in the polyurethane reactive mixture. For example, superabsorbent polymer particles as disclosed in US 3,669,103 may be used.

In another aspect the invention relates to a continuous process for the manufacture of a flexible, hydrophilic polyurethane foam of the invention comprising the steps

a. providing the polyurethane foam comprising the acrylate groups in sheet form,

b. contacting the polyurethane foam sheet with at least one polyalkylene imine,

c. heating the polyurethane foam sheet obtained in step b) to a temperature of about 30 to about 100 °C for about 10 min. to about 24 h,

"Continuous" process as used herein means a process in which the polyurethane foam is produced either directly in a sheet form or cut into sheet form. In sheet form the polyurethane foam may then be subsequently fed to any possible remaining steps in a continuous manner, such as fed to a bath for contact with the polyalkylene imine, such as an aqueous solution of polyethylene imine, then led through rolls which remove any undesired excess of the solution, optionally dried and then heated. The contacting of the polyurethane foam sheet with the polyalkylene imines can be performed by impregnation in so-called "Foulard" machines with two or three cylinders, or impregnation by means of immersion in a bath, or impregnation by means of a pressing cylinder, spray impregnation, or the like.

In step a) the polyurethane foam sheet is preferably provided by reacting a reactive mixture containing the polyisocyanates, the isocyanate reactive hydrogen containing compound and the compound containing the acrylate. It is clear that the acrylate groups can also be provided on the isocyanate reactive hydrogen containing compound. As described above, additives to enhance the water swelling capacity or the hydrophilicity of the foam can be added to the polyurethane reactive mixture, such as superabsorbent powders. Also optionally at least one polymer of N-vinyl monomers is additionally added to the reactive mixture, preferably selected from the group consisting of polyvinyl pyrrolidone, polyvinyl imidazole and mixtures thereof. Therewith, polyurethane foam blocks or sheets can be produced which are then either directly usable in step b) or may be cut into sheets prior to step b).

The polyisocyanates, the compound with at least two active hydrogen atoms, the compound containing at least one acrylate group and the polymer of N-vinyl monomers are as described above.

In step b) of the process of the invention the polyurethane sheet as obtained in step a) is contacted with polyalkylene imine, such as a solution of polyethylene imine. The polyalkylene imine, in particular polyethylene imine, is as defined above.

In step b) the polyurethane foam is preferably contacted with a solution of the polyalkylene imine, in particular polyethylene imine, preferably in a solvent selected from water or any suitable organic solvent such as an alcohol, methylene chloride, ketons and esters. In case of using polyethylene imines the most preferred solvent is water.

The concentration of the polyalkylene imine in a solution, in particular of polyethylene imine, which is brought into contact with the polyurethane foam sheet in step b) is about 1 to about 100 wt.-% of the solution.

In a preferred embodiment, step b) is conducted by immersing the sheet into polyalkylene imine, in particular into an aqueous solution thereof, such as an aqeous solution of polyethylene imine. After having soaked up the solution, pressure may be applied to the sheet by any conventional means, such as rolls, in particular with the use of a Foulard machine and therewith squeezing any undesired amount of solution out of the sheet. Thus, the desired wet pick-up weight can conveniently be controlled and adjusted to the desired amount. The wet pick-up weight is defined as the amount of the polyalkylene imine or the solution thereof, adsorbed onto the polyurethane foam sheet and is calculated according to the following equation:

$$\text{wet pick-up weight} = 100 \times ((\text{foam wet weight} / \text{foam dry weight}) - 1)$$

The wet pick-up weight is preferably about 10 % to about 250 %, preferably about 100 to about 200 %.

If a solution is used in order to apply the polyalkylene imine in step b), in particular if an aqueous solution of polyethylene imine is used, then the solvent, such as water, is preferably at least partially, preferably almost completely evaporated from the sheet prior to conducting step c). The content of the solvent may be reduced in such a way that the concentration of the polyalkylene imine, in particular the polyethylene imine, is high enough so that the reaction with the acrylate groups may start and proceed. This may be achieved by drying preferably at a temperature of about 50 to about 150 °C. The optional drying step prior to step c) and step c) may be conducted in an oven, in particular a ventilated oven, such as a microwave, radiation, or IR oven.

In step c) the polyurethane foam sheet, which is brought in contact with the polykalyene imine or solution thereof as described above, is heated. During this thermofixation process, the polyalkylene imine is securely fixed or bound to the polyurethane foam sheet. It has now surprisingly been found that the thermofixation can be conducted at considerably lower temperatures than known in the prior art. Preferably the temperatures used in step c) range from about 20 to about 60°C, most preferred from 40°C to about 50°C. The duration of the heating is preferably for a period of time of about 1 to about 18 h, most preferred about 2 h to about 16 h

The examples as described in WO 01/55242, require a heating to about 100°C during 16 hours in order to thermofix the polyalkylene imine to the polyurethane foam. Heating a polyurethane foam containing a polyalkylene imine at such temperatures will result in a disintegration of the polyurethane sheet material through aminolysis. However, when using lower temperatures, no fixation of the adsorbing agent can be obtained with the polyurethanes as described e.g. in WO 01/55242.

By providing acrylate groups on the polyurethane foam according to the invention, thermofixation can be executed at lower temperatures of about 20 to about 60°C, preferably from 40°C to about 50°C so that the mechanical properties of the polyurethane foam are not negatively influenced, whilst at the same time, a securely fixing of the polyethylene imine to the polyurethane foam is assured, by a covalent binding with the acrylate groups of the polyurethane foam as described above.

After the thermofixation, the excess of polyalkylene imine which is not securely fixed on the polyurethane foam sheet, can be washed off. Preferably, the polyurethane is washed with water. The number of cycles depends on the concentration of the polyalkylene imines used in step b) and how much excess of the compound will still not be fixed to the polyurethane after step c).

In a further optional step, the polyurethane foam sheet can be dried. The required dryness is dependent upon the further application of the obtained polyurethane foam.

The amount of polyethylene imine which is securely fixed to the polyurethane foam, can be determined by performing the $Cu^{2+}$ adsorption capacity of the foam as described hereinafter.

The process of the present invention therefore allows an improved thermofixation of the polyalkylene imine to the polyurethane foam at low temperatures whilst maintaining the desired mechanical properties thereof. In a most preferred embodiment, the polyurethane foam sheet is provided containing acrylate groups and comprising polyvinyl pyrrolidone and/or polyvinylimidazole, which is then contacted with polyethylene imine. Therewith two advantages are achieved, namely, first, a fast surface reaction of fixed adsorbing compound, such as polyethylene imine, at the large surface area of the polyurethane foam with the compounds and substances to be adsorbed, in particular from aqueous media, and, second, a slower but effective adsorption of adsorbing substances onto the polyvinyl pyrrolidone and/or polyvinyl imidazole inside the polyurethane foam matrix.

The polyurethane foam sheets of the invention are particularly useful in the adsorption of organic and inorganic substances, such as dyes, such as anionic dyes, in particular reactive dyes, particularly dyes containing sulphonic groups. In a particular preferred embodiment, the polyurethane foam is used as a filter material for aqueous waste water treatment, such as from the textile industry, the food industry, the paper industry, chemical industry and the metal processing industry. It has been shown that the number of rinsing cycles of the waste water was considerably reduced by passing this waste water over the polyurethane foam sheet of the invention.

The invention will now be described in more detail in the following example.

Table 1: formulation

| Foam ID | Example 1 acrylate foam | Example 2 acrylate + PVP | Example 3 blank ref. foam |
|---|---|---|---|
| | Part | Parts | Parts |
| Lupranol VP9349 (BASF) | 70 | 70 | 70 |

(continued)

| Foam ID | Example 1 acrylate foam | Example 2 acrylate + PVP | Example 3 blank ref. foam |
|---|---|---|---|
| | Part | Parts | Parts |
| Lupranol 2084 (BASF) | 30 | 30 | 30 |
| Niax L620 | 1.2 | 1.2 | 1.2 |
| Stannous octoate | 0.12 | 0.12 | 0.12 |
| Dabco 33 LV | 0.4 | 0.4 | 0.4 |
| Water | 2.4 | 2.4 | 2.4 |
| PVP (Luvicross - BASF) | 0 | 20 | 0 |
| Monohydroxybutylacrylate (BDMA from BASF) | 5 | 5 | 0 |
| T80 | 34.6 | 34.6 | 31.4 |
| index | 105 | 105 | 105 |
| Foam density in kg/m$^3$ | 41.5 | 41.6 | 35.4 |
| CLD 40% in kPa | 1.6 | 1.5 | 1.6 |
| Tensile strength in kPa | 117 | 110 | 128 |
| Tensile elongation in % | 268 | 258 | 309 |
| tear resistance in N/cm | 3.3 | 3.2 | 3.9 |

The foams were produced using an inclined conveyor with all means for corrections in processing regarding flows, temperatures, pressure control, conveyor speed, mixing speed, mixhead pressure control, nucleation, etc. to obtain a good quality foam with desired mechanical properties and desired visual appearance and cell size around 600 - 800 micron.

Table 2: thermofixation conditions + adsorption capacity

| Impregnation ID | Sample 1 | Sample 2 | Sample 3 | Sample 4 | Sample 5 | Sample 6 |
|---|---|---|---|---|---|---|
| Foam ID | Example 1 | Example 1 | Example 1 | Example 2 | Example 3 | Example 3 |
| Used PEI | Lupasol P | Lupasol P | Lupasol P | Lupasol P | Lupasol P | Lupasol P |
| Concentration PEI-solution % | 15 | 15 | 15 | 15 | 15 | No impregnation |
| Thermofixing temp in °C | 23 | 50 | 100 | 50 | 100 | 100°C |
| Thermofixing time in hours | 16 | 16 | 16 | 16 | 16 | 16h |
| Wet Pick-up in % | 152 | 152 | 152 | 145 | 157 | 0% |
| Dry pick-up weight in % | 88 (wet) | 21 | 16 | 19 | 17 | 0 |
| Pick up after wash and dry in% | 0.1 | 8.0 | 2.5 | 8.0 | 1.2 | -0.3 |
| Adsorbed Cu2+ by the treated foam in ppm | 9 | 191 | 245 | 861 | 158 | 5.2 |
| Adsorbed C2+ per gram of treated foam in mgCu2+/g foam | 0.4 | 5.7 | 7.3 | 25.8 | 4.7 | 0.2 |
| Tesile strength after thermofixing in kPa | 121 | 115 | 49 | 113 | 42 | 125 |

(continued)

| Impregnation ID | Sample 1 | Sample 2 | Sample 3 | Sample 4 | Sample 5 | Sample 6 |
|---|---|---|---|---|---|---|
| Tensile elongation after thermofixing in % | 278 | 265 | 88 | 250 | 75 | 309 |

Discussion of the results

Three foam samples were used: a blank formulation (example 3), a formulation with only acrylate added (example 1) and a formulation with the combination of the PVP-powder and acrylate added (example 2) as shown in table 1.

All samples (except sample 6) were impregnated with a polyethylene imine (Lupasol P of BASF) at a concentration of 15% Lupasol P in water as shown in table 2.

The wet pick-up was for all samples around 150%, and all the samples were thermally treated during 16 hours, at the given temperatures.

After 16 hours the dried and thermofixed weight was determined, compared to the original weight of the foam. All samples were than washed and dried, and the final pick-up weight was determined again.

All samples were measured for copper adsorption capacity. A foam sample of 1 g each is treated with 25 gram of a 2000 ppm $Cu^{2+}$ solution by shaking during 120 minutes. The left over copper solution is than removed from the foam. This solution was diluted to obtain results within the measuring range of the Dr. Lange Cu-test kit (LCK 329) used for the determination of the Cu-concentration with a Cadas 200 UV-spectrophotometer. By measuring the left over concentration from the treated solution, the amount of adsorbed copper to the foam can be calculated.

Conclusions based on the results

The blank reference foam formulation (example 3 - table 1) has the lowest density, but also the highest mechanical properties (128 kPa tensile strength). All other formulations are slightly lower in mechanical properties but comparable to the reference foam.

It is clear from the results in table 2 that every high temperature treatment (100°C) of the foam in contact with the polyethylene imine, results in a very strong decrease of mechanical properties (see sample 3 and 5).

Cu-adsorption is only obtained at elevated thermofixation temperature (100°C) in case of a blank foam formulation treated with polyethylene imine (sample 5), but with the high decrease in mechanical properties.

Cu-adsorption is already obtained at a thermofixation temperature of 50°C (sample 2) when the foam contains acrylate groups. At that temperature, virtually no deterioration in mechanical properties is noticed. If the thermofixing temperature is increased to 100°C with the acrylate treated sample, the mechanical properties of the foam are reduced strongly (sample 3).

**Claims**

1. Flexible, hydrophilic polyurethane foam comprising at least one polyalkylene imine, wherein the polyurethane comprises acrylate groups which allow to bind the polyalkylene imine to the polyurethane.

2. Polyurethane foam according to claim 1, wherein the polyurethane is obtainable by reacting at least one polyisocyanates and at least one compound comprising at least two active hydrogen atoms, wherein at least one of the compounds comprises at least one acrylate group and/or wherein an additional compound comprising at least one acrylate groups and at least one isocyanate reactive hydrogen atom is added.

3. Polyurethane foam according to any of the preceding claims, wherein the acrylate groups are provided by a compound comprising at least one, preferably at least two isocyanate reactive hydrogen atoms.

4. Polyurethane foam according to claim 3, wherein the compound comprising at least one, preferably at least two isocyanate reactive hydrogen atoms are alkyl acrylates having at least one, preferably at least two hydroxy groups and/or amine groups.

5. Polyurethane foam according to any one of the preceding claims wherein the polyalkylene imine is polyethylene imine.

6. Polyurethane foam according to claim 5, wherein the polyethylene imine has a molecular weight (Mw) about 200 to about 2.000.000.

7. Polyurethane foam according to any one of claims 1 to 4 wherein the polyalkylene imine is tetraethyl diethylene triamine.

8. Polyurethane foam according to any of the preceding claims, wherein the polyurethane additionally comprises at least one polymer of N-vinyl monomers, preferably selected from the group consisting of polyvinyl pyrrolidone, polyvinyl imidazole and mixtures thereof.

9. Continuous process for the manufacture of a flexible, hydrophilic polyurethane foam according to any of the preceding claims comprising the steps

    a) providing the polyurethane foam comprising the acrylate groups in sheet form,
    b) contacting the polyurethane foam sheet with at least one polyalkylene imine,
    c) heating the polyurethane foam sheet obtained in step b) to a temperature of about 30 to about 100 °C for a period of time of about 10 min. to about 24 h,

10. Process according to claim 9, wherein the polyurethane foam sheet in step b) is contacted with a solution of polyethylene imine.

11. Use of a polyurethane foam sheet according to any one of claims 1 to 8 for the adsorption of organic compounds or inorganic compounds, such as dyes and/or heavy metals.

12. Use of a polyurethane foam sheet according to any one of claims 1 to 8 as a filter material for aqueous waste water treatment, such as from the textile industry, the food industry, the paper industry, chemical industry and the metal processing industry.

## EUROPEAN SEARCH REPORT

European Patent Office

Application Number

EP 08 00 4624

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/101803 A (BASF AG [DE]; ARLT ANDREAS [DE]; KLEMM MICHAEL [DE]; SIEMENSMEYER KARL) 13 September 2007 (2007-09-13) * page 1, lines 5-8 * * page 4, line 17 - page 5, line 20 * * page 5, line 39 - page 6, line 20 * * page 7, lines 22-26 * * examples 24-26 * ----- | 1-12 | INV. C08G18/48 C08G18/67 C08G18/83 C08J9/00 C08J9/12 B01J20/26 |

TECHNICAL FIELDS SEARCHED (IPC)

C08G
C08J

The present search report has been drawn up for all claims

| Place of search | Date of completion of the search | Examiner |
|---|---|---|
| Munich | 18 September 2008 | Lartigue, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 00 4624

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2008

| Patent document cited in search report | Publication date | Patent family member(s) | Publication date |
|---|---|---|---|
| WO 2007101803 A | 13-09-2007 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0155242 A
- US 4051081 A
- US 3873476 A

- GB 1429711 A
- US 6271277 B
- US 3669103 A